(19) Europäisches Patentamt / European Patent Office / Office européen des brevets

(11) **EP 4 361 969 A1**

(12) **EUROPEAN PATENT APPLICATION**

(43) Date of publication:
**01.05.2024 Bulletin 2024/18**

(21) Application number: **22203310.2**

(22) Date of filing: **24.10.2022**

(51) International Patent Classification (IPC):
**G06V 20/69** (2022.01)  **G06F 18/25** (2023.01)

(52) Cooperative Patent Classification (CPC):
**G06V 20/698; G06F 18/254**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ummon HealthTech
71000 Macon (FR)**

(72) Inventors:
- **Vinçon, Nathan
  91440 Bures sur Yvette (FR)**
- **MOREL, Louis-Oscar, Olivier, Félix
  71570 ROMANECHE-THORINS (FR)**

(74) Representative: **Fidal Innovation
4-6 avenue d'Alsace
92400 Courbevoie (FR)**

(54) **METHOD TO CLASSIFY AN IMAGE OF A BIOLOGICAL TISSUE OF A PATIENT ACCORDING TO A LABEL RELATIVE TO A BIOLOGICAL CHARACTERISTIC OF THE BIOLOGICAL TISSUEL**

(57)     A method to classify an image of a biological tissue of a patient according to a label relative to a biological characteristic of the biological tissue,
this label, relative to the biological characteristic of the biological tissue, being an upper-label according to a label hierarchical architecture,
the hierarchical label architecture comprising :
- a first lower hierarchical label level comprising :
a plurality of first infra-level labels, each being relative to a first lower level biological characteristic of the biological tissue,
- a upper hierarchical label level comprising :
an upper-level label, relative to the biological characteristic of the biological tissue ,
defined by a combination of the plurality of infra-level labels,

the biological characteristics of the biological tissue being determined by the first lower level biological characteristics of the biological tissue;
the method comprising:
- a classification module implements a plurality of infra-level label classification models on the image of biological tissue,

each infra-label classification model being relative to a first infra-level label of the first lower hierarchical label level relative to a first lower level biological characteristic of the biological tissue;
the classification output of each of the infra-level label classification models implemented being relative to a first lower level biological characteristic of the biological tissue.

1.

Case 1

Case 2

EP 4 361 969 A1

**Description**

FIELD OF THE INVENTION

The invention relates to the technical field of deep learning and biology / bioinformatics (genetics, genomics, transcriptomics, epigenetics, protein, metabolomics).

The invention has a particular application - without being limited to it - in the field of cancer detection and/or therapies.

TECHNOLOGICAL BACKGROUND

Precision medicine aims to provide more efficient therapies by targeting specific molecular tumor profiles. Molecular biology diagnostic tools can reveal molecular characteristics with techniques such as DNA sequencing, RNA quantification, methylation profiling etc. These techniques are very important as they condition the access to molecular guided treatment options which are efficient at targeting specific genomic alterations. The use of such tools is therefore becoming a routine clinical reality, which increases their day-to-day demand.

However, these tests have a long waiting period which can lead to a lower chance of survival, they require a large amount of tissue that can make them impractical and they are expensive.

Thus, the need for molecular alterations testing is creating an increasing expectation for alternative solutions to standard molecular and genomic profiling methods.

Meanwhile, there has been accumulating evidence suggesting that Deep Learning methods can be applied on hematoxylin and eosin (H&E) stained histopathology images to infer molecular information. Deep Learning-based methods have shown state-of-the-art performance in predicting outcome and significant performance in predicting relevant biomarkers. It has been applied for the prediction of single somatic mutations, copy number variations, molecular subtypes, RNA expression, and prognosis.

However, major difficulties still prevent the clinical use of Deep Learning methods and, in general, classification models because of the complexity of molecular world that lead to models not accurate or reliable enough.

For example, classification models have still difficulties to classify images according to labels relative to biological characteristics with complex and variables morphological signatures.

This invention aims to overcome the above-mentioned drawbacks of the state-of-art.

SUMMARY OF THE INVENTION

Thus, the invention relates to a method to classify an image of a biological tissue of a patient according to a label relative to a biological characteristic of the biological tissue,

this label, relative to the biological characteristic of the biological tissue, being an upper-label according to a label hierarchical architecture,
the hierarchical label architecture comprising :

- a first lower hierarchical label level comprising :
a plurality of first infra-level labels, each being relative to a first lower level biological characteristic of the biological tissue,
- a upper hierarchical label level comprising :

an upper-level label, relative to the biological characteristic of the biological tissue, defined by a combination of the plurality of infra-level labels,
the biological characteristic of the biological tissue being determined by the first lower level biological characteristics of the biological tissue;

the method comprising:

- a classification module implements a plurality of infra-level label classification models on the image of biological tissue,

each infra-label classification model being relative to a first infra-level label of the first lower hierarchical label level relative to a first lower level biological characteristic of the biological tissue;
the classification output of each of the infra-level label classification models implemented being relative to a first lower level biological characteristic of the biological tissue.

As the training of a classification model according to the upper-label relative to the a biological characteristic - also named the relevant biological characteristic - can be hard in view of its complex and variables morphological signatures, the method suggests to train classification models according to infra-level labels relative to others biological characteristics defining or determining the biological characteristic to be determined which are, them, more reliable and accurate due to their specialization for a morphological signature of the other biological characteristics. In other words, those infra-level labels are relative to one individual biological characteristic.

Indeed, the method suggests to benefit from the biological relation between of the relation between to others biological characteristics and the biological characteristic, i.e. the determination of the biological characteristic by the others biological characteristic. This relation can considered as hierarchical relation since the others biological characteristic determine of define the biological characteristic. Thus, those others biological characteristics are named "first lower level biological characteristics" as they represents a sub-class of the biological characteristic.

The definition of the hierarchical label architecture according to the method comprising the infra-level label relative to the first lower level biological characteristics and the upper-label relative to the relevant biological characteristic is the mirror of the biological relation between of the relation between to others biological characteristics and the biological characteristic.

Thanks to infra-levels label, the classification of the image of the biological tissue according to the upper-label is possible without implemented a classification model trained according to this upper-label as the upper-label is defined by a combination of the plurality of infra-level labels.

The infra-level label classification models implemented by the classification module allows determining infra-levels classification outputs relative to the first lower level biological characteristics of the biological tissue and then to combine those infra-levels classification outputs to determine the upper-label output according to the definition of the upper-label by the infra-level labels.

It is possible that the classification module implements an infra-level label classification model on the image of biological tissue according to a label relative to a group of first lower level biological characteristics of the biological tissue, the classification output of the infra-level label classification model implemented being relative to a group of biological characteristics of the biological tissue, the classification output of the infra-level label classification model implemented being true if a morphological signature of one of the biological characteristic of the group is identified.

In addition of the infra-level labels relative to one first lower biological characteristic, it is relevant to define an infra-level label relative to a group of first lower biological characteristics. This label is true if one of the biological characteristics of the group is identified on the classified image, i.e. if a morphological signature of one of the biological characteristic of the group is identified on the image by the infra-level classification module implemented on the image according to this label.

This new label take advantage of a surprising effect observed according to which, sometimes, it is easier classifying an image according to a group of biological characteristics (defined with a logical OR as detailed above) than classifying the image according to each individual biological characteristics.

However, it is hard to know which first lower biological characteristic is better classified alone or with a group.

Thus, this new label is also an infra-level label and therefore, combined the infra-level label relative to one individual biological characteristic, allows better determining the upper-label relative to the relevant biological characteristic.

It is also possible that the hierarchical label architecture comprises :

- a second lower hierarchical label level comprising :
  a plurality of second infra-level labels, each being relative to a second lower level biological characteristic of the biological tissue, an first infra-level label being defined by a combination of the plurality of second infra-level labels, the first lower level biological characteristics of the biological tissue being determined by second lower level biological characteristics of the biological tissue;

In this case, it is possible that the classification module implements a plurality of second infra-level label classification models on the image of biological tissue, the classification output of the each second infra-level label classification models implemented being relative to a second lower level biological characteristic of the biological tissue.

Indeed, it has been observed that some biological characteristics that do not directly biologically determine the relevant biological characteristic can also have an impact on the reliability of the classification of the image according to the upper-label.

For example, those biological characteristic can define or determine one of the first lower level biological characteristic and can therefore be name second lower level biological characteristic.

The new second lower infra-level labels correspond to this biological case.

It is possible that the classification module implements an upper level classification model on the image of the biological tissue according to the upper-label relative to the biological characteristic of the biological tissue, the classification output of the upper level classification model implemented being relative to the biological characteristic of the biological tissue.

Indeed, even if such classification model can be hard to train and not enough reliable by itself, directly classify the image according to the upper-label relative to the relevant biological characteristic provides information (the corresponding classification output) to be combined with the infra-level classification outputs.

In addition, such classification model can be trained thanks to the infra-level classification outputs determining the upper-label by combination and not directly.

It is possible that the classification module implements an inter-hierarchical classification model on the image of the biological tissue according to a label exterior to or not comprised in the hierarchical label architecture; the label exterior to or not comprised in the hierarchical label architecture being relative to a biological characteristic of the biological tissue; the classification output of the inter-hierarchical classification model implemented being relative this biological characteristic of the biological tissue.

Indeed, the biological world and especially the molecular world is complex and some biological characteristics with no biological known relations between them can sometimes have, somehow, a link one with the others.

Thus, defining a label relative to such biological characteristic, which does not define one other label of the hierarchical label architecture i.e. that is not comprised in this hierarchical label architecture and implements a classification model on the studied image relative to such label can also be useful for the determination of the relevant biological characteristic.

It is possible that an aggregation module aggregates the classification outputs of the various infra-level classification models implemented by the classification module into an aggregated classification output by implementing a aggregation method on the classification outputs.

The aggregation method is preferably one of the following:

- weighted sum method,
- multi layer perceptron method,
- unweighted model averaging method,
- majority voting method,
- Bayes optimal classifier method,
- stacked Generalization method, or
- super learner method,

This aggregation allows combining all the classification outputs obtained according to an appropriate method to lead to one aggregated output. The appropriate method can depends on the relevant biological characteristic to be identified on the studied image.

This aggregated output represents a consolidated answer of the classification of the image according to the method.

The image on which the classification models are implemented by the classification model can be one of the followings:

- an image of a histopathology slide of a biological tissue of the patient,
- an image of a cytology slide of a biological tissue of the patient.

The images can be obtained by any acquisition system and method.

In an alternative embodiment, the invention also relates to a method to classify an image of a biological tissue of a patient according to a label relative to a biological characteristic of the biological tissue,

this label, relative to the biological characteristic of the biological tissue, being an infra-label - the relevant infra-level label - according to a label hierarchical architecture,
the hierarchical label architecture comprising :

- a first lower hierarchical label level comprising :
a plurality of first infra-level labels, each being relative to a first lower level biological characteristic of the biological tissue including the biological characteristic,
- a upper hierarchical label level comprising :

an upper-level label, relative to an upper biological characteristic of the biological tissue, defined by a combination of the plurality of infra-level labels,
the upper biological characteristic of the biological tissue being determined by the first lower level biological characteristics of the biological tissue;

the method comprising:

- a classification module implements a plurality of infra-level label classification models on the image of biological tissue and an upper-label classification model

each infra-label classification model being relative to a first infra-level label of the first lower hierarchical label level relative to a first lower level biological characteristic of the biological tissue;
each infra-label of the infra-label classification model implemented being different from the relevant infra-level label;
the upper-label being relative to relative to a upper-biological characteristic of the biological tissue,
the upper-label being defined by a combination of the plurality of infra-level labels;
the classification output of each of the infra-level label classification models implemented being relative to a first lower level biological characteristic of the biological tissue;
the classification output of each of the upper label classification model implemented being relative to the upper biological characteristic of the biological tissue.

According to this alternative, the relevant biological characteristic to be determined is not the one defined by or which verifies or possess the characteristics of the first lower biological characteristics but one first lower biological characteristic of the biological tissue.

However, the suggestion of the invention to define relevant labels (upper and infra-level) based on a biological relation between an upper biological characteristics and a plurality of first lower level biological characteristics still applies.

The invention also relates to one specific application of the method: identify the mutational status of a gene from an image of a biological tissue of a patient.

The advantages of the general method and the specific technical effects of the embodiment of the general method still apply.

That is why, the invention also relates to a method to identify the mutational status of a gene from an image of a biological tissue of a patient by implementing the general method according to the invention.

To do so, as a gene is a sequence of nucleotides and the mutational status of a gene is defined by a presence of a variant in this sequence; the general method is implemented wherein:

- the biological characteristic of the biological tissue is the mutational status of the gene;
- the infra-level labels of the infra-level label classification models implemented by the classification module are relative to one of the alternative variants of the gene whom mutational status is to be identified, the classification outputs of the infra-level label classification models implemented are relative to one of the alternative variants of the gene whom mutational status is to be identified.

Indeed, a mutation in gene is affecting the function of the gene product (generally a protein). Multiple pathological variant of a gene are affecting the same gene function but not in a strictly similar manner (e.g. protein folding is not exactly the same). Still it is widely known in biology and more specifically in histology that the structure (the morphology) is related to the function. This is why one should expect to see similar but not strictly identical morphology from function-related mutations (e.g. variant of the same gene, or gene mutation of gene from the same pathway or related to the same ontology). Empirically, we find that some labels (e.g. has the gene the variant A, or has variant being A or B are easier to classify (i.e. to separate) than other.

Therefore using classifiers that are classifying similar morphologies (because similar functions) can be used as a "context" to help the classification of harder-to-classify labels, especially with the help of mathematical logic (because A is true is equivalent to (A or B) is true but B is false).

It is possible that the infra-level label of the infra-level label classification model implemented by the classification module is relative to a group of at least two alternative variants of the gene whom mutational status is to be identified.

Variants of the same gene are not always changing the function the same way, for example there are silencing mutations and activating mutations. The first removes the function of the protein while the second exacerbates it. Still even if the function is not the same in this situation, the gene is responsible for a pathology and gene mutational status is relevant, independently of the activating or silencing nature of the mutation.

Then as function is related to morphology, we may find, surprisingly, easier to classify activating mutations and inhibiting mutations independently than conjointly. That is why, for example, it's may be more reliable to classify according to the labels relative to the variant A and the variant B (eg p(A) + p(B)) than to classify according to the label variant A or B (eg p(A or B)) if the label variant A or B is hardly separable in this example.

It is possible that the infra-level label of the infra-level label classification model implemented by the classification module is relative to one of the alternative variants of the gene whom mutational status is to be identified, the classification output of the infra-level label classification model implemented by the classification module is relative to one of the alternative variants of the gene whom mutational status is to be identified.

It is possible that the infra-level label of the infra-level label classification model implemented by the classification module is relative to one of the following mutation type:

- substitution,
- insertion,
- deletion,
- deletion-Insertion,
- duplication,
- inversion,
- frameshift,
- repeat expansion

It is possible that the infra-level label of the infra-level label classification model implemented by the classification module is relative to :

- the gene ontology,
- a gene pathways related to the gene,
- drug or disease related to the gene

It is possible that the upper-label is relative to the mutational status of the gene and the classification module implements a classification model according to this upper-label.

These particular applications allow predicting mutation variants in multiple cancers and therefore help defining better treatment for those cancers.

It is possible that the label, relative to a biological characteristic of the biological tissue, exterior to or not comprised in the label hierarchical architecture is relative to one of the following biological characteristics:

- a variant for another gene,
- a variant of a biological entity different from a gene

The invention also relates to the use of this specific application of the general method to to determine if the biological tissue is cancerous or not.

The invention also relates to a system to classify an image of a biological tissue of a patient according to a label relative to a biological characteristic of the biological tissue,

this label, relative to the biological characteristic of the biological tissue, being an upper-label according to a label hierarchical architecture,
the hierarchical label architecture comprising :

- a first lower hierarchical label level comprising :
  a plurality of first infra-level labels, each being relative to a first lower level biological characteristic of the biological tissue,
- a upper hierarchical label level comprising :

    an upper-level label, relative to the biological characteristic of the biological tissue , defined by a combination of the plurality of infra-level labels,
    the biological characteristics of the biological tissue being determined by the first lower level biological characteristics of the biological tissue;

the system comprising:

- a classification module adapted to implement a plurality of infra-level label classification models on the image of biological tissue,

each infra-label classification model being relative to a first infra-level label of the first lower hierarchical label level relative to a first lower level biological characteristic of the biological tissue;
the classification output of each of the infra-level label classification models implemented being relative to a first lower level biological characteristic of the biological tissue.

The classification module of the system is adapted to implement any embodiment of the general method and of the specific method above described.

The invention also relates to a computer program for classify an image of biological tissue from a biological tissue of a patient according to a label relative to a biological characteristic of the biological tissue wherein the computer program is adapted, when run on a processor, to cause the processor to implement any methods of the invention.

BRIEF DESCRIPTION OF THE DRAWINGS

Embodiments of the invention will be described below, in relation to the following drawings :

Fig. 1 shows a schematic view of labels engineering.

Fig. 2 shows some outputs classification obtained according to the method applied to a specific application.

On the drawings, the same reference signs show the same or similar objects.

DETAILED DESCRIPTION

General overview and definitions

Data

It is understood that, here, the term "data" always refers to technical data, i.e. data which concerns the applications of science, of scientific or theoretical knowledge, in practical achievements, industrial productions. As they concerns the applications of such knowledge, the technical data can be measured data, data responsible for a technical application - i.e. measurable - but also image or videos captured by an acquisition system.
As an example, data can refers to an image, a video, a measure (length, mass, velocity, temperature etc.)
Applied to the statistic area and computer area, those technical data can be used to train machine learning models and/or to implement machine learning models on.
A technical data, or simply data here, are used to measured or capture a system - as defined further - or its evolution.

System

It is understood that, here, the term "system" always refers to a physical system, i.e. a functional unit whose parts are interconnected and exchange (...) matter, energy or information.
In particular, in the medicine, biological or anatomical area, a system is a group of organs or tissues with the same structure, participating in the same function, constituting a biological entity.
As an example, a system can be a machine, a biological tissue or a cell.

Classification

The term classification can apply to one or all of:

- the process of classifying (distinguishing and distributing kinds of "things" into different groups)
- a resulting set of classes (also called "a classification system")
- the assignment of elements to pre-established classes, and/or
- the discover or the building of the classes defined a classification structure.

Here, the "things" distinguished by the process of classifying are physical characteristic of a system (as defined above).

Classification architecture

Thus, the process of classifying lead to a classification structure or architecture where classes and sub-classes - i.e. a class in a class or of a class - are defined according to physical characteristics.

In other words, a system classified in a class verifies or possess the characteristics according to which the class is defined.

A sub-class is a class then, by definition, a system classified in a sub-class of a class verifies or possess the specific characteristic of the sub-class. But, a system classified in a sub-class of a class also verifies or possess the more general characteristics of the class.

The classification structure or architecture defines a hierarchical and logical link between the characteristics of a sub-class and a characteristic of a class. Indeed, if a system verifies or possesses or is defined by a physical characteristic of a sub-class, then the system verifies or possesses or is defined by a physical characteristic of the class comprising the sub-class.

A very general example can be the following : "truck", "car" and "bicycle" are sub-class of the class "vehicle" in the classification structure or architecture "engine with wheels" (which can also defines an upper class for "vehicle").

Another example can be the following : "variant A", "variant B", "variant C" are sub-class of the class "gene" since a variant - which is a biological characteristic - define the mutational status of a gene - other biological characteristic - . The variant can be seen as hierarchically lower than the gene as they define one characteristic of the gene (its mutational status).

In statistics, and computer area

In statistics and computer area, classification is the problem of identifying which of a set of categories or classes an observation (or observations) or an event belongs to.

The observation or the event is relative to a system as defined above.

The characteristic of the observation or event relative to the physical system can be acquired by image/video acquisition system leading to image or video of the observation or by measurement acquisition system leading to measured data of the characteristic of the observation.

These characteristics are physical characteristics of the system and, thus, the real value, and in fine the variations over time, of the time variables can be measured, captured and/or acquired by sensors, measurement systems, capture systems and/or acquisition systems adapted to detect and measure these values R over time.

Classification models

Applied to technical data, a classification model is its broadest meaning is an algorithm, i.e. a set of steps, by which an entry data can be classified into a class, also called a label, defined according to a classification system or classification architecture or classification structure.

Classification and clustering are examples of the more general problem of pattern recognition, which is the assignment of some sort of output value to a given input value. The input value derived from data as defined above.

To ensure this assignment of some sort of output value to a given input value derived from data, classification model are build and implemented on the input value representing the input data of the classification model.

From a very general point of view, it is possible to divide the classification model into two categories: the rules-based models and the machine learning models.

A classification model can be a rules-based model where the different features or characteristic according to which the classification is made, i.e. the different classes are defined, are known and used to build the classification model.

A rules-based model can be very complex but as the rules are defined by a developer for conceiving the model, the output of model is fully interpretable by its developer. A rules-based model is human being approach and allows an automatization and a complexification of what a human mind can think.

A classification model can also be a machine learning model where the different features or characteristic according to which the classification will be made, i.e. the different classes will be defined, are unknown or not completely known and the training and/or the implementing of classification model allows to define them.

As a contrary, a machine learning model - here a classification machine learning model - does not reproduce, even in a complex way, the human mind approach. As the model is defined by itself at least in a little part (see further with the four broad categories) during the training, the output of the model cannot be fully interpretable by its developer.

Machine learning

Machine learning area and an example of machine learning classification model will now be detailed.

Machine learning (ML) is the study of computer algorithms that can improve automatically through experience and by the use of data. It is seen as a part of artificial intelligence. Machine learning algorithms build a model based on sample data, known as training data or training dataset, in order to make predictions or decisions or classification without being explicitly programmed to do so. Machine learning algorithms are used in a wide variety of applications, such as in medicine, email filtering, speech recognition, and computer vision, where it is difficult or unfeasible to develop conventional algorithms to perform the needed tasks.

The term "prediction" refers to the output of an algorithm after it has been trained on a historical dataset and applied to new data when forecasting the likelihood of a particular outcome. In some cases, it really does mean that you are predicting a future outcome; other times, though, the "prediction" has to do with a categorization of data (not a future data), where the term "classification" can also be used. In other words, the term "prediction" has to be understood in its broader meaning in the machine learning field. As said before, it can refer to classification output, categorization output or any output of a machine learning model.

Machine learning approaches are traditionally divided into four broad categories, depending on the nature of the "signal" or "feedback" available to the learning system:

- Supervised learning: the computer is presented with example inputs and their desired outputs, given by a "teacher", and the goal is to learn a general rule that maps inputs to outputs.

- Unsupervised learning: no labels are given to the learning algorithm, leaving it on its own to find structure in its input. Unsupervised learning can be a goal in itself (discovering hidden patterns in data) or a means towards an end (feature learning).

- Reinforcement learning: a computer program interacts with a dynamic environment in which it must perform a certain goal (such as driving a vehicle or playing a game against an opponent). As it navigates its problem space, the program is provided feedback that's analogous to rewards, which it tries to maximize.

- Semi-supervised learning: semi-supervised learning falls between unsupervised learning (without any labeled training data) and supervised learning (with completely labeled training data). Some of the training examples are missing training labels, yet many machine-learning researchers have found that unlabeled data, when used in conjunction with a small amount of labeled data, can produce a considerable improvement in learning accuracy. In weakly supervised learning, the training labels are noisy, limited, or imprecise; however, these labels are often cheaper to obtain, resulting in larger effective training sets.

Supervised learning algorithms build a mathematical model of a set of data that contains both the inputs and the desired outputs. The data is known as training data, and consists of a set of training examples. Each training example has one or more inputs and the desired output, also known as a supervisory signal. In the mathematical model, each training example is represented by an array or vector, sometimes called a feature vector, and the training data is represented by a matrix. Through iterative optimization of an objective function, supervised learning algorithms learn a function that can be used to predict the output associated with new inputs. An optimal function will allow the algorithm to correctly determine the output for inputs that were not a part of the training data. An algorithm that improves the accuracy of its outputs or predictions or prediction over time is said to have learned to perform that task.

Types of supervised learning algorithms include active learning, prediction and regression. Prediction algorithms are used when the outputs are restricted to a limited set of values, and regression algorithms are used when the outputs may have any numerical value within a range. As an example, for a prediction algorithm that filters emails, the input would be an incoming email, and the output would be the name of the folder in which to file the email.

Similarity learning is an area of supervised machine learning closely related to regression and prediction, but the goal is to learn from examples using a similarity function that measures how similar or related two objects are. It has applications in ranking, recommendation systems, visual identity tracking, face verification, and speaker verification.

Training of the machine learning models

Usually, machine learning models require a lot of data in order for them to perform well. Usually, when training a machine learning model, one needs to collect a large, representative sample of data from a training set. Data from the training set can be as varied as a corpus of text, a collection of images, and data, as defined above, collected from individual users of a service.

Machine learning classification, models - definition and examples

Performing machine learning process involves creating a model by conceiving its architecture; then train it on some training data and, finally, implement it additional data, distinct from the training data, to make classification or prediction.

The processing of the model on additional data to make classification or prediction is realized by implementing the model on the additional data.

The additional data on which the model is implemented can be any type of data but have to be of the same type of the training data. The data with which the model are trained and on which they are implemented are technical data as defined above.

Hereafter are some definitions to characterize a machine learning model.

A machine learning classification model is trained to classify one entry data (as defined above) into a classification output according to a label, i.e. a characteristic according to which the entry data is classified.

As example, given that the entry is an image of an unknown animal and the label of classification model is "dog", then if the classification model - when implemented of the entry image - classifies the unknown image with the label "dog", it will be considered that the image is an image of a dog and by extension that the unknown animal is a dog. As a contrary, if the classification model does not classify the unknown image with the label "dog", it will not be considered that the image is an image of a dog and by extension that the unknown animal is not a dog (and still unknown).

The classification output of such classification model is often a probability between 0 and 1 for the label of the classification model (here "dog"). Here, it is corresponding to the probability between 0 and 1 that there is dog on the image based on the value between 0 and 1 of the classification output.

In addition, the non-classification of a classification model according to its label (here, the classification according to the label "dog") can be considered equivalent to the classification into the label "non-dog".

Thus, following the same example, another label "non-dog" according to which another classification model is trained and is implemented on the image of an unknown animal is relevant.

A multi-label is a label defined by multiple simple labels defined above. In other words, a plurality of simple labels can be used to create a new label defined by the logical combination of at least two simple labels.

The logical combination means that a logic operator AND is used to combine the simple labels to create the multiple-label.

For example, the simple labels can be the following :

- "lung" classifying the probability that a biological tissue is a lung,
- "colon"classifying the probability that a biological tissue is a colon,
- "cancer" classifying the probability that a biological tissue is cancerous,
- "non-cancer" classifying the probability that a biological tissue is non-cancerous.

Therefore, a multi-label could be "lung_cancer", "lung_non-cancer", "colon_cancer"; "colon_non-cancer". As two simple labels are used to create the multi-labels, they are two-multi-label.

For example, the multi-label "lung_cancer" classifies the probability that a biological tissue is a cancerous lung.

A classification model can be trained according to a multi-label. Therefore a classification model trained according to a multi-label gives more information on the entry data (an image of a biological tissue for example) that a simple label classification model, i.e. a classification model trained according to a simple label.

A multi-label can comprises any number of simple label combined with a logic operator AND.

Hierarchical labels apply the definition of hierarchical classification architecture to the labels of machine learning classification models.

As a reminder, a classification structure or architecture defines a hierarchical and logical link between the characteristics of a sub-class and a characteristic of a class. Indeed, if a system verifies or possesses or is defined bya physical characteristic of a sub-class, then the system verifies or possesses or is defined bya physical characteristic of the class comprising the sub-class.

Thus, hierarchical labels also define a label hierarchical architecture between the hierarchical labels.

The hierarchy between labels is the following: if a label from a lower hierarchical level - i.e. a lower label - is considered true, then all the labels from an upper hierarchical level - i.e. an upper label - linked to the lower label are considered true.

For example, a label hierarchical architecture with two hierarchical levels comprises one upper hierarchical level and one lower hierarchical level.

On those two levels, different labels can be defined. Then, a hierarchical link between two labels from the two different levels can be defined.

Following the example given about the classes and the sub-classes above, the upper hierarchical level of the label hierarchical architecture can comprise the label "vehicle". This label "vehicle" can be linked to the labels "truck", "car" and "bicycle" belonging to the lower hierarchical level.

According to those links, if the label "truck" is considered true according to the corresponding classification model (i.e. a classification model whom label is "truck") then the label "vehicle" is also considered true. Same reasoning applies for the label "car" and the label "bicycle".

A label hierarchical architecture can comprises any number of hierarchical levels and a label of one hierarchical level can be linked to any number of labels from a different hierarchical levels.

Various types of models have been used and researched for machine learning systems or deep learned systems. Hereafter, we list a list example of these various types of models which can be trained with and implemented on technical data.

Hereafter are described examples of machine learning models type which can be used as classification model.

Artificial neural networks model

Artificial neural networks (ANNs), or connectionist systems, are computing systems vaguely inspired by the biological neural networks that constitute animal brains. Such systems "learn" to perform tasks by considering examples, generally without being programmed with any task-specific rules.

An ANN is a model based on a collection of connected units or nodes called "artificial neurons", which loosely model the neurons in a biological brain. Each connection, like the synapses in a biological brain, can transmit information, a "signal", from one artificial neuron to another. An artificial neuron that receives a signal can process it and then signal additional artificial neurons connected to it. In common ANN implementation, the signal at a connection between artificial neurons is a real number, and the output of each artificial neuron is computed by some non-linear function of the sum of its inputs. The connections between artificial neurons are called "edges".

Artificial neurons and edges typically have a weight that adjusts as learning proceeds. The weight increases or decreases the strength of the signal at a connection. Artificial neurons may have a threshold such that the signal is only sent if the aggregate signal crosses that threshold. Typically, artificial neurons are aggregated into layers. Different layers may perform different kinds of transformations on their inputs. Signals travel from the first layer (the input layer) to the last layer (the output layer), possibly after traversing the layers multiple times.

A particular ANN model is a deep learning model. It consists of multiple hidden layers in an artificial neural network. This approach tries to model the way the human brain processes light and sound into vision and hearing. Learning can be supervised, semi-supervised or unsupervised.

Deep-learning architectures such as deep neural networks, deep belief networks, deep reinforcement learning, recurrent neural networks and convolutional neural networks have been applied to fields including computer vision, speech recognition, natural language processing, machine translation, bioinformatics, drug design, medical image analysis, material inspection and board game programs, where they have produced results comparable to and in some cases surpassing human expert performance.

Decision tree model

Decision tree learning uses a decision tree as a predictive model to go from observations about an item (represented in the branches) to conclusions about the item's target value (represented in the leaves). It is one of the predictive modeling approaches used in statistics, data mining, and machine learning. Tree models where the target variable can take a discrete set of values are called prediction trees; in these tree structures, leaves represent class labels and branches represent conjunctions of features that lead to those class labels. Decision trees where the target variable can take continuous values (typically real numbers) are called regression trees. In decision analysis, a decision tree can be used to visually and explicitly represent decisions and decision making. In data mining, a decision tree describes data, but the resulting prediction tree can be an input for decision making.

Support-vector machines model

Support-vector machines (SVMs), also known as support-vector networks, are a set of related supervised learning methods used for prediction and regression. Given a set of training examples, each marked as belonging to one of two categories, an SVM training algorithm builds a model that predicts whether a new example falls into one category or the other. An SVM training algorithm is a non-probabilistic, binary, linear classifier, although methods such as Platt scaling exist to use SVM in a probabilistic prediction setting. In addition to performing linear prediction, SVMs can efficiently perform a non-linear prediction using what is called the kernel trick, implicitly mapping their inputs into high-dimensional feature spaces.

Regression analysis model

Regression analysis encompasses a large variety of statistical methods to estimate the relationship between input variables and their associated features. Its most common form is linear regression, where a single line is drawn to best fit the given data according to a mathematical criterion such as ordinary least squares. The latter is often extended by regularization (mathematics) methods to mitigate overfitting and bias, as in ridge regression. When dealing with non-linear problems, go-to models include polynomial regression (for example, used for trendline fitting in Microsoft Excel), logistic regression (often used in statistical prediction) or even kernel regression, which introduces non-linearity by taking advantage of the kernel trick to implicitly map input variables to higher-dimensional space.

Bayesian network model

A Bayesian network, belief network, or directed acyclic graphical model is a probabilistic graphical model that represents a set of random variables and their conditional independence with a directed acyclic graph (DAG). For example, a Bayesian network could represent the probabilistic relationships between diseases and symptoms. Given symptoms, the network can be used to compute the probabilities of the presence of various diseases. Efficient algorithms exist that perform inference and learning. Bayesian networks that model sequences of variables, like speech signals or protein sequences, are called dynamic Bayesian networks. Generalizations of Bayesian networks that can represent and solve decision problems under uncertainty are called influence diagrams.

In statistics, naive Bayes classifiers are a family of simple "probabilistic classifiers" based on applying Bayes' theorem with strong (naive) independence assumptions between the features. They are among the simplest Bayesian network models, but coupled with kernel density estimation, they can achieve higher accuracy levels.

Multinomial logistic regression is used to predict categorical placement in or the probability of category membership on a dependent variable based on multiple independent variables. The independent variables can be either dichotomous (i.e., binary) or continuous (i.e., interval or ratio in scale). Multinomial logistic regression is a simple extension of binary logistic regression that allows for more than two categories of the dependent or outcome variable. Like binary logistic regression, multinomial logistic regression uses maximum likelihood estimation to evaluate the probability of categorical membership.

Multiple linear regression (MLR), also known simply as multiple regression, is a statistical technique that uses several explanatory variables to predict the outcome of a response variable. The goal of multiple linear regression is to model the linear relationship between the explanatory (independent) variables and response (dependent) variables. In essence, multiple regression is the extension of ordinary least-squares (OLS) regression because it involves more than one explanatory variable.

Other models exist but those are the principal ones.

General proposition of the invention

The invention belongs to the field of machine learning, especially but not limited to the field of deep learning, and the biology/bioinformatics (genetics, genomics, transcriptomics, epigenetics, protein, and metabolomics) field.

In those fields, a lot of relevant information for the scientist can be found, even extracted, from the study of biological tissues (living or dead).

The study of biological tissues can be realized by studying images of biological tissues.

Any relevant technique of medical imaging can be used to produce images of biological tissues to study, i.e. to represent in a relatively simple format a large amount of information from a multitude of measurements acquired in a well-defined way.

The invention can be applied to any image of biological tissues to study corresponding to the above definition.

However, this invention has a particular application to the following images :

- histopathological images, and/or
- cytological images.

Based on such images of biological tissue, one can wishes to classify an image of biological tissue according to a label relative to a biological characteristic of the biological tissue if the presence of such biological characteristic for the biological tissue is relevant for him.

For example, it can be relevant to identify a disease, a treatment etc.

Thus, confronted to such problem, it is possible to use a classification model specially developed with a label relative to the biological characteristic, hereafter the relevant biological characteristic or the desired characteristic.

However, sometimes, develop and train such classification model to obtain good and reliable results can be hard.

It can be the case when the morphological signature of the biological characteristic is very close to other morphological signature with no strict frontier between those states. In such case, it can be too hard, even impossible, to train the classification model to distinguish and, *in fine,* classify the image according to the label relative the biological characteristic

Indeed, the molecular universe in biology is extremely complex, so there is no strict limit between one state and another. It is more often a continuum that is difficult to discriminate.

One example of such case can be the morphological signature of two variants of the same gene.

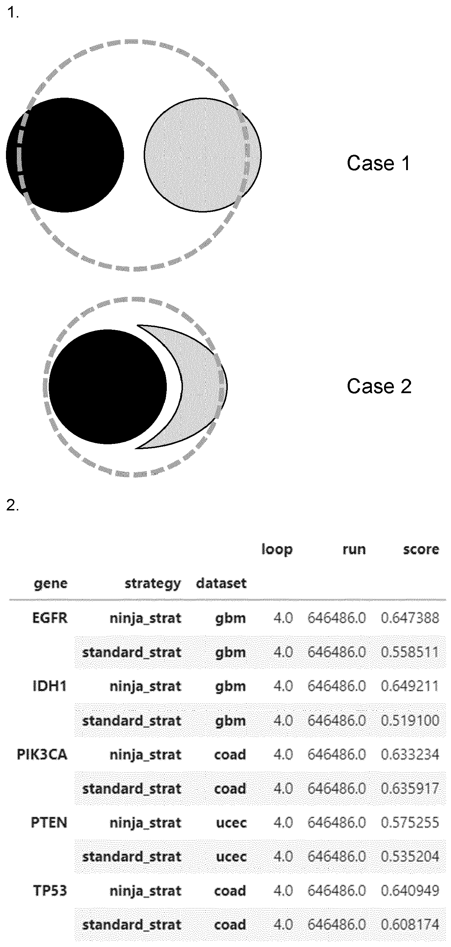

At figure 1, a schematic example is illustrated and explained here:

The diagrams illustrated at figure 1 illustrate these principles. For example, considering that the model can easily discriminate circles from the rest (this is purely schematic). Black represents class A, and grey represents class B. In the first case, we see that it is much easier to discriminate A, or B, than directly A/B because the circle does not discriminate well A or B from the rest. In the second case, we see that A (black) and A/B (black + grey) are easily discriminated, while B (grey) alone does not have a very suitable shape and is therefore difficult to discriminate.

In addition, some classes are easier to discriminate than others, but that it is difficult to know this a *priori.*

Thus, a need for a better classification model remains.

System

The method is implemented by a computerized system. This system comprises various computerized modules which are each responsible for a step of the method.

Hereafter, the term "module" refers to a computerized module implementable by a computer thanks to a computer program adapted to, when run on a processor of the computer, to cause the processor to implement the computerized module functions.

A classification computerized module or prediction module is able or adapted to implement any machine learning model (for example machine learning models as described in the general overview).

This module is able or adapted to implement any models on a given dataset. This dataset is called the entry dataset as it represents the entry or entries of the model, whereas the prediction or prediction of the model, as explained in the general overview, is the output of the model.

The obtained output of the classification model can be a prediction vector of one of the following types:

- a simplex probability vector (multiclass),

- a one dimension probability vector, or

- a N-dimension probability vector.

An aggregation computerized module is able or adapted to aggregate various outputs into one aggregated output.

The aggregation computerized module is able or adapted to aggregate the classification outputs into an aggregated classification output using, for example, a truth discovery method such as:

- weighted sum method,
- multi layer perceptron method,
- unweighted model averaging method,
- majority voting method,
- Bayes optimal classifier method,
- stacked Generalization method,
- super learner method,
- consensus method,
- query-by-committee method.

Description of the method

Objective

The proposition of the invention is to implement, on the studied image, a plurality of classification models, each being developed according to an infra-level label relative to a biological characteristic (hereafter, the first lower level biological characteristics to distinguish them from the relevant characteristic).

Those first lower level biological characteristics determine or define or are responsible for the definition of the relevant biological characteristic.

As explained above (Hierarchical biological architecture), those first lower level biological characteristics can be seen as sub-classes of the class defined by the relevant biological characteristic.

In addition, an upper-label relative to the relevant biological characteristic is defined by a combination of the plurality of infra-level labels relative to a first lower level biological characteristic.

Thus, according to the explanations detailed above, if the classification model classifies the image with the infra-level labels (i.e. label of the lower biological characteristic) and then, according to the output classification of the infra-level labels, the upper-label is obtained.

Indeed, if an infra-level classification model classifies the studied image according to an infra-label, it means that the image comprises a morphological signature of a corresponding lower level biological characteristic.

Same applies for all infra-level classification model implemented on the studied image.

Then, based on all infra-level label classification output, the upper-label is obtained and the relevant biological characteristic is deduced (or classified by extension of the classification of the image of the biological tissue).

Important to note that, in this general embodiment, the relevant characteristic is obtained with no classification model developed with the upper-label (or according to this upper-label) implemented on the studied image. This is possible thanks to the definition of the upper-label as a combination of the infra-level labels (see multi-label) and to the definition of appropriate infra-level labels.

Steps of the general method

A preliminary step to the method is to define the hierarchical label architecture according to the relations between the relevant biological characteristic of the biological tissue and the first lower level biological tissue.

As explained above, the first lower level biological characteristics determine or define or are responsible for the definition of the relevant biological characteristic.

The relation between the first lower level biological characteristics and the relevant biological characteristic can be known prior to the implementation of the method or found with a distinct machine learning model implemented on data (for example, using large amount of medical data of any kind to discover new hierarchical link between the relevant biological characteristic and others biological characteristic).

Then, based on the relation between the first lower level biological characteristics and the relevant biological characteristic, the infra-level labels are defined (and the infra-level classification models are trained).

The biological characteristics defining the relevant biological characteristic are named "first lower level biological characteristics" since they directly define the relevant biological characteristic, so, based on the explanation about sub-classes and class, there is one level between them and the relevant biological characteristic.

Here is a major difference with the way to improve the classification model according to the invention. Indeed, generally, to improve a classification model, improvements relates to the input data by manipulating the features of the input data or the samples of the input data. Here, the improvement is made by manipulating the label, i.e. the reference data.

A label corresponding to a lower characteristic compared to the relevant characteristic is named infra-level label or lower label.

A classification model developed with this lower label is named infra-level label classification model.

Then, according to the method, a classification module implements infra-level label classification models on the image of biological tissue according to infra-level labels relative to a biological characteristic of the biological tissue.

This lead to classification outputs of the infra-level label classification models relative to the first lower level biological characteristics of the biological tissue.

Then, according to the classification output, it can be considered that the image of the biological tissue comprises, or not, a morphological signature of the first lower level biological characteristic of the biological tissue. In other words, it can be considered that the infra-label relative to the lower biological characteristic is true or false.

Then, from a label point of view: by definition of hierarchical labels, the upper-label of the relevant characteristic can be considered true or false whereas no classification model trained according this upper-label has been implemented thanks to the relation between the first lower level biological characteristics and the relevant biological characteristic.

And, from a biologic point of view: since it can be considered that the image of the biological tissue comprises, or not, a morphological signature of the first lower level biological characteristic of the biological tissue, then the relation between the first lower level biological characteristics and the relevant biological characteristic allows determining the relevant biological characteristic.

As a result, the implementation of the infra-level label classification models allows deducing a physical state of the biological tissue since, this implementation allows deducing if the biological tissue verifies or possess the relevant biological characteristic or to define the relevant biological characteristic based on the first lower level biological characteristics determined by the infra-level label classification models output.

In others word, there is a causal relation between the conception of the classification model, its implementation and the deducing of the presence or not of the relevant characteristic for the biological tissue (which is a physical state of the biological tissue) or the deducing of the relevant characteristic.

The causal relation is demonstrated by the definition of the hierarchical labels which is itself defined by the relation between the first lower level biological characteristics and the relevant biological characteristic.

limprovements of the method

The above-detailed method can be improved by improving the classification model and especially by improving its conception with new labels leading to classification models allowing the extraction of new information which, then, allows deducing the relevant biological characteristic (or if the relevant biological characteristic is possessed or verified by the biological tissue) with more reliability and/or accuracy.

Additional embodiment of the method will now be described. They can be implemented alone or in combination.

According to another embodiment, it is also possible to define an infra-level label relative to relative to a group of first lower level biological characteristics of the biological tissue.

Indeed, it can be easier to train a classification model to classified images according to a label relative to a group of first lower level biological characteristics of the biological tissue because the morphological signature of such group of biological characteristics is easier to identify than one of the biological characteristic of the group.

Thus, the upper-label can also be defined according to the infra-label relative to a group of first lower level biological characteristics of the biological tissue.

This label corresponds to the presence of a morphological signature of one of the first lower level biological characteristics on the studied image of the biological tissue. The label is true or positive if one of the morphological signatures is identified on the studied image by the classification model implemented.

Then, the classification module can further implement an infra-level classification model according to this label.

Then, based on the relation between the first lower level biological characteristics themselves or with the relevant biological characteristic, the presence or not of the biological characteristic which is hard to identify alone can be deduced with the classification outputs of the infra-level classification models relative to the group of first lower level biological characteristics of the biological tissue and to the first lower level biological characteristics.

According to another embodiment, it is possible to consider that a first lower level biological characteristic is itself defined by biological characteristics.

As explained above, the biological characteristics defining the relevant biological characteristic are named "first lower level biological characteristics" since they directly define the relevant biological characteristic, so, based on the explanation about sub-classes and class, there is one level between them and the relevant biological characteristic.

Thus, there is one level between them and the first lower level biological characteristic and two levels between them and the relevant biological characteristic.

Thus, they are name "second lower level biological characteristics" in relation to the relevant biological characteristic.

Then, according to one embodiment, it is possible to define a plurality of second infra-level labels, each being relative to a second lower level biological characteristic of the biological tissue.

Classification models can be trained according to those second infra-level labels.

Then, according to this embodiment, the classification module further implements the plurality of second infra-level label classification models on the image.

Then, as the classification output of the each second infra-level label classification models implemented are relative to a second lower level biological characteristic of the biological tissue, the first lower level biological characteristic can be deduced from them according to the reasoning above detailed about the first lower level characteristic and the relevant biological characteristic.

This adding of a new level in the hierarchical allows deducing more biological characteristic of the biological tissue for which it could be hard, if not impossible, to train a classification model according to label relative to those biological characteristics.

This embodiment can be extended to any levels : in others words, any number of lower biological characteristic can be itself defined by any number of other biological characteristics according to which a infra-level label can be defined and a classification model can trained and implemented according to the method.

According to another embodiment, a classification model can be trained according to the upper-label relative to the relevant biological characteristic.

Indeed, in the other embodiment, the upper-label is defined by the combination of the infra-level labels and no classification model is trained and implemented according to this upper-label.

But, even if the training of such classification model is difficult as explained above, implement such classification model give classification output that can be exploited with the classification outputs of the infra-level classification model.

Indeed, the classification output of the classification model according to the upper-label may give an information not enough reliable to be considered alone but taken in combination with the other classification outputs, it adds a new information to be considered in order to determine the relevant biological characteristic or to determine if the biological tissue possess it.

According to another embodiment, it is possible to classify the studied image according to a label not comprised in the hierarchical label architecture.

Indeed, as the biological dependency between different biological characteristics can be not fully understood and for example, two biological characteristics considered independent from each other can be not as independent as it was considered. It might be a suspected dependency between those biological characteristic with no well-defined relation between them able to be translated into the hierarchical label architecture.

Thus, extract information from the studied image relative to a biological characteristic for which the relation with the relevant biological characteristic is not well-defined can be relevant.

In this case, an inter-hierarchical classification model according to a label exterior to or not comprised in the hierarchical label architecture is trained and then implemented on the studied image. The classification output of the inter-hierarchical classification model implemented is relative this biological characteristic of the biological tissue for which the relation with the relevant biological characteristic is not well-defined can then be taken into consideration with the others classification outputs of the infra-level classification models to determine the relevant biological characteristic or to determine if the biological tissue possess it.

According to one embodiment, an aggregation module aggregates any of the classification outputs of any of the embodiment of the method above detailed into an aggregated classification output according to the aggregation method above detailed.

The aggregation step allows combining the different classification outputs according to an aggregation method. In addition, the aggregation step is particularly useful when the upper-classification model is implemented on the studied image as its output can be combined with the upper-label deduced from the infra-level classification outputs.

Some method can be more relevant for some biological characteristic.

In an alternative embodiment, the label relative to a biological characteristic of the biological tissue to be determined by the method to classify an image is not an upper-label of the label architecture but an infra-level label corresponding to a first lower hierarchical label level.

As the reminder, the hierarchical label architecture comprises :

- a first lower hierarchical label level comprising :
  a plurality of first infra-level labels, each being relative to a first lower level biological characteristic of the biological tissue,
- a upper hierarchical label level comprising :
  an upper-level label, relative to a upper-biological characteristic of the biological tissue , defined by a combination of the plurality of infra-level labels,

The upper-biological characteristic of the biological tissue is determined by the first lower level biological characteristics of the biological tissue.

In other words, there is a biological relation between the first lower level biological characteristics and the upper-biological characteristic.

Thus, if the upper label relative to the upper-biological characteristic can be easily determined by a classification model relative to this label and, at the opposite, one infra-level label is hard to classified, then it can be relevant to use relation between the upper-label and the infra-level labels (corresponding to the biological relation between the upper biological characteristic and the first lower level biological characteristics) to deduce the infra-level label hard to classified, eg the relevant infra-level label.

To do so, the method comprises:

- a classification module implements a plurality of infra-level label classification models on the image of biological tissue and an upper-label classification model

  each infra-label classification model being relative to a first infra-level label of the first lower hierarchical label level relative to a first lower level biological characteristic of the biological tissue;
  each infra-label of the infra-label classification model implemented being different from the relevant infra-level label.
  the upper-label being relative to relative to a upper-biological characteristic of the biological tissue,
  the upper-label being defined by a combination of the plurality of infra-level labels,

the classification output of each of the infra-level label classification models implemented being relative to a first lower level biological characteristic of the biological tissue.

Then, based on the output of the upper classification model and of each infra-level label classification models implemented, the relevant infra-level label is deduced.

In this alternative embodiment of the invention, the relevant biological characteristic to be determined is not the one defined by or which verifies or possess the characteristics of the first lower biological characteristics but one first lower biological characteristic.

However, the proposition of the invention to define relevant label (upper and infra-level) based on a biological relation between an upper biological characteristics and a plurality of first lower level biological characteristics still applies.

One particular embodiment in genetics -mutational status of a gene

One particular application of the method will now be described.

When the medical, personal or family context suggests a disease of genetic origin, a doctor may prescribe a genetic examination. Several methods of analysis may be used.

For example, in the treatment of cancer, such prescription often occurred.

If the abnormality results from the modification of a gene (DNA), it is generally called a mutation. These mutations can lead to more or less serious dysfunctions: this is called a gene disease. In this situation, the disease can be monogenic (it results from the mutation of a single gene) or polygenic (several genes are involved).

For example, the presence of mutation in cancer can be associated with a response to a targeted cancer therapy. Therefore it has become important information while it helps giving a more specialized and more efficient treatment for each patient. Detection of mutation is routinely made by DNA-sequencing diagnostic tests.

The principle of sequencing is the reading of the bases (genetic code) to identify an error (mutation). The device that allows this reading is called a sequencer. Unlike chromosomes, DNA is not visible under a microscope. A preliminary step is therefore necessary for the sequencer to read the gene. This consists of reproducing the DNA fragment in several million identical copies (a technique known as PCR (Polymerase Chain Reaction). Once amplified, the DNA can then be read.

The new generations of sequencers (NSG for New Generation Sequencing) allow this reading in a much faster way. These techniques are generally used to read several genes at the same time, or even all of a person's genes if the indication requires it (this is called an "exome").

However, the greater the number of genes sequenced, the longer the interpretation time.

Thus, known method as sequencing can represent a lot of burden for the medical team.

In addition, sometimes the sequencing of the DNA does not allow a direct determination of the health status of a studied biological tissue.

For example, it can be hard to determine if a biological tissue is cancerous or not only based on the mutational status of the gene from the DNA sequencing.

The method applied to the mutational status of a gene allows overcoming the burden of the known methods.

In this particular application, method allows identifying the mutational status of a gene from an image of biological tissue from a biological tissue of a patient.

As described above, the image of the biological tissue can be an image of histopathology slide of the biological tissue.

A gene being a sequence of nucleotides and its mutational status of a gene being defined by a presence of a variant in this sequence. Thus, a hierarchical label architecture can defined according to which :

- the upper-label is relative to the mutational status of the gene, and
- infra-level labels are each relative to a variant of the gene.

That is why, the general method can be applied wherein :

- the biological characteristic of the biological tissue is the mutational status of the gene;
- the infra-level labels of the infra-level label classification models implemented by the classification module are relative to one of the alternative variants of the gene whom mutational status is to be identified.

A gene exists in several forms called variant of a gene. The gene to be identified has the morphological signature of the variant, i.e. the form in which it is present in the biological tissue being analyzed, i.e. the biological tissue for which an image is studied.

However, the morphological signatures of the variants of the same gene can be quite different from each other.

Thus, training a gene status classification model to recognize several morphological signatures of a gene to be identified from the image of the tissue - i.e. a classification model trained according to a label relative to the mutational status of the gene - is often more difficult than training several variant classification models to recognize a single morphological signature of a gene variant to be identified - i.e. infra-level classification models trained according to a label relative to a variant of the gene.

Indeed, it has been observed that some variants were more predictable than the label "gene mutated" (i.e. the information "gene mutated" vs "gene non-mutated") even if less data is available.

Variants have their own morphological signature. Thus, classifying directly at the gene level (i.e. with a label relative to the mutational status) corresponds to classifying according to different morphological signatures, which can be impossible.

By implementing the method with this specific upper-label and infra-level labels, the method allows determining if a morphological signature of a variant is present of the studied image (i.e. a classification model manage to identify it) and therefore to determine the mutational status of the gene based on the image of the biological tissue.

This mutational status determined by the morphological signature classified by the method can be relevant to appreciate if the biological tissue is cancerous or not, or has a risk to become cancerous or not.

For example, cancer cells are malignant cells that are that are more or less similar in structure to the normal cells of the corresponding healthy tissue but have morphological and functional abnormalities compared to normal cells.

The method allows exploiting those morphological abnormalities by determining the mutational status of a gene based on the morphological signature of the variant present in the studied image (i.e. the morphological abnormalities of the cells).

As for the general method, there is a causal relation between the conception of the classification model, its implementation and the deducing of the presence or not of the morphological signature of a variant (which is a physical state of the biological tissue) in the studied image of the cells of the biological tissue and the deducing of the mutational status of the gene.

The causal relation is demonstrated by the definition of the hierarchical labels which is itself defined according to the relation between the variants and the mutational status of a gene.

In one embodiment, it can be relevant to define a label relative to a group of at least two alternative variants of the gene whom mutational status is to be identified. This label is considered true if one of the two alternatives variants is identified on the studied image by the implementation of the classification model.

Thus, considering the limited possibility of the mutational status of the gene to be determined, it can be relevant that the infra-level label classification module implements a classification model relative to this group of at least two alternative variants of the gene.

For example, as illustrated at figure 1, assuming that the gene has two mutational status possible corresponding to a variant A and a variant B.

It is possible that the variant A has a morphological signature adapted to be classified by a classification model trained with a label relative the variant A but, at the opposite that no classification model has been trained for the variant B because of the complexity to classify the variant B in an image of the cells of the biological tissue.

In this case, it is also possible that the presence of the variant A or B has a morphological signature also adapted to be classified by a classification model trained with a label relative the group of variants A or B.

In others words, three labels can be defined: the label relative to the variant A, the label relative to the variant B and the label relative to the presence of variant A or variant B.

Those labels are called triads.

Thus, the mutational status according to the variant B can be deduced from the infra-level classification output of the infra-level classification models relative to the variant A and to the variant A and B according to the following statistics formula:

$$ClassificationOutput_{Label}(B) = ClassificationOutput_{Label}(A \vee B) - ClassificationOutput_{Label}(A)$$

Thus, classifying the presence of the morphological signature of the variant B based on the presence of the morphological signature of the joint presence of variants A and B and the presence of the morphological signature of the variant A is easier than predicting B directly.

This is the schematic principle of using triads to take advantage of adjacent classes and groups of classes. From the classification of the variant classification models, it is possible to trace back to information about the mutational status of the gene to be identified even if the morphological signature of the variant present on the studied image is difficult to classified.

This example detailed the mechanism of the definition of triads for two variants (the first level lower biological characteristics of this particular application of the method) but it can extended to any number of variants of a gene and any number of groups of variants of a gene.

In one embodiment, it is also possible to define a label relative to any of the following gene mutation type:

- substitution,
- insertion,
- deletion,
- deletion-Insertion,
- duplication,
- inversion,
- frameshift,
- repeat expansion

In one embodiment, it is also possible to define a label relative to :

- the gene ontology,
- a gene pathways related to the gene,
- drug or disease related to the gene

In one embodiment, it is also possible to train a classification model according to a upper-label relative to the mutational status of the gene and then the classification module implements a classification model according to this upper-label.

Even if, as explained above, train a classification model according to a label relative to the mutational status of the gene is difficult as it is difficult for a classification model to identify different morphological signature, it can be relevant to implement one in addition of the infra-level classification models relative to the variants of the gene.

Indeed, the information from the variants classification models can be used to train the classification model relative to the mutational status of the gene (i.e. with the upper-label relative to the mutational status) and then be able to classify directly at the gene level.

It is also possible to define a label relative to a variant from another gene. Thus, in this embodiment, the classification module implements a classification module according to label relative to a variant of another gene.

This label relative to the variant from another gene is exterior to or not comprised in the label hierarchical architecture of the gene.

Indeed, the presence of morphological signature of a specific variant of a gene in the cells of the biological tissue can be easy to determine with a classification model and may indicate a higher probability of a particular variant of the gene whom status is to be determined.

All those embodiments of the method applied to the specific application of identifying or determining the mutation status of a gene from an image of a biological tissue can be used to determine if the biological tissue is cancerous or not.

Concrete example

The method was applied to the following tumor types: breast (BRCA), lung (LUAD), colon (COAD) and ovary (OV). The settings of the system used to implement the method are now described. However, they do not limit the scope of the system according to the invention.

Settings

All analyses were performed using Python.

Aperio SVS files of diagnostic slides (labeled by DX in their name) from the 4 datasets are first selected. The foreground was then extracted, then the images are tiled in nonoverlapping patches of 600x600 pixels. These patches are associated with the label 1 if the gene is muted, 0 if the gene is none muted. These patches and labels were used as inputs of the EfficientNetB7 [REF] neural network. Output classification was a float between 0 and 1 for each patch. For the slide-level scoring, we extracted the 99th percentile of the patch prediction score distribution.

Each output classifcation was tested using 5-fold cross validation. As some slides are from the same case, they were gathered in the same fold.

An EfficientNetB7 neural network architecture with a single sigmoid output layer after the global average pooling layer was used. The model was trained for 5 epochs where each epoch included all patches without further refinement.

Experiments were run with a NVIDIA RTX A4000 graphic card and TensorFlow v2.8.0-rc0, keras v2.8.0, CUDA 11.5.

Histological images of the previous mentioned organs were used.

Molecular labels (variant labels, i.e. label relative to a variant) were determined from the masked somatic mutations maf file of somatic mutation using the MuTect2 [Cibulskis et al. 2013] algorithm corresponding to the dataset. An IMPACT value of "HIGH" or "MODERATE" categorized by VEP software [McLaren et al. 2016] was considered positive while other values were considered negative.

Only genes having at least 2 variants occurring at least 10 times were studied, consisting of a list of 29 genes. For minor variants occurring less than 10 times, they were gathered in a category named *rest.* The gene with all its mutational variants was named *full.*

| | | |
|---|---|---|
| PIK3CA - BLCA | TP53 - BLCA | KRAS - COAD |
| PIK3CA - COAD | TP53 - COAD | ECGF - GBM |
| IDH1 - GBM | TP53 - GBM | CDKN2A - HNSC |
| PIK3CA - HNSC | TP53 - HNSC | IDH1 - LGG |
| TP53 - LGG | EGFR-LUAD | KRAS-LUAD |
| TP53 - LUAD | PIK3CA - LUSC | TP53 - LUSC |
| KRAS - PAAD | SPOP-PRAD | BRAF-SKCM |
| KRAS-SKCM | NRAS - SKCM | BRAF-THCA |
| NRAS-THCA | PIK3CA - UCEC | PTEN- UCEC |
| PIK3CA - BRCA | TP53 - BRCA | |

Results

The implementations of the classification models according to labels relative to the above variants shows that BRAF-p.V600E in THCA has a slightly higher AUC than BRAF-full (0.856 vs 0.839), the mutational hotspots PIK3CA-p.H1047R in HNSC [REF] shows higher AUC (0.859 vs 0.560), or PIK3CA-p.E542K in COAD [REF](AUC of 0.817 vs 0.583) for the PIK3CA-full. For the NRAS gene in SKCM, variants p.Q61L, p.Q61K and p.Q61R respectively have AUC of 0.764, 0.656 and 0.646 compared to an AUC of 0.564 for the full gene. These results suggest that molecular variants have their own specific morphological signature and thus, that multiple variants were better predicted alone than mixed with the other variants of the same gene.

As shown in figure 2, some genes alterations weren't easily predictable at gene level. However, some of their variants had much higher AUC, thus meaning there were morphological features predicting these variants.

More precisely, the classification output of a variant was compared with the classification output of another variant and with the classification output of the pair of these two variants (the pair is defined as a logical OR, therefore is positive when at least one of the variants is positive). It was found that individual variants from a pair were sometimes consistently easier or consistently harder to predict than the pair. In other words AUC of the two individual variants were both greater or both lower than the AUC of the pair.

This raises the following conclusion: if a gene has two variants that are better predicted alone than together, a separate training could help improve the performance of the entire gene mutation classification model.

**Claims**

1. Method to classify an image of a biological tissue of a patient according to a label relative to a biological characteristic of the biological tissue,

   this label, relative to the biological characteristic of the biological tissue, being an upper-label according to a label hierarchical architecture,
   the hierarchical label architecture comprising :

   - a first lower hierarchical label level comprising :
   a plurality of first infra-level labels, each being relative to a first lower level biological characteristic of the biological tissue,

- a upper hierarchical label level comprising :
an upper-level label, relative to the biological characteristic of the biological tissue , defined by a combination of the plurality of infra-level labels,

the biological characteristics of the biological tissue being determined by the first lower level biological characteristics of the biological tissue;
the method comprising:

- a classification module implements a plurality of infra-level label classification models on the image of biological tissue,

each infra-label classification model being relative to a first infra-level label of the first lower hierarchical label level relative to a first lower level biological characteristic of the biological tissue;
the classification output of each of the infra-level label classification models implemented being relative to a first lower level biological characteristic of the biological tissue.

2. Method to classify an image of biological tissue from a biological tissue of a patient according to a label relative to a biological characteristic of the biological tissue according to the preceding claim,

the method further comprising:

- the classification module implements an infra-level label classification model on the image of biological tissue according to a label relative to a group of first lower level biological characteristics of the biological tissue,

the classification output of the infra-level label classification model implemented being relative to a group of biological characteristics of the biological tissue,
the classification output of the infra-level label classification model implemented being true if a morphological signature of one of the biological characteristic of the group is identified.

3. Method to classify an image of biological tissue from a biological tissue of a patient according to a label relative to a biological characteristic of the biological tissue according to any of the preceding claims,

wherein the hierarchical label architecture comprises :

- a second lower hierarchical label level comprising :
a plurality of second infra-level labels, each being relative to a second lower level biological characteristic of the biological tissue,

an first infra-level label being defined by a combination of the plurality of second infra-level labels,
the first lower level biological characteristics of the biological tissue being determined by second lower level biological characteristics of the biological tissue;
the method further comprising:

- the classification module implements a plurality of second infra-level label classification models on the image of biological tissue,

the classification output of the each second infra-level label classification models implemented being relative to a second lower level biological characteristic of the biological tissue.

4. Method to classify an image of biological tissue from a biological tissue of a patient according to a label relative to a biological characteristic of the biological tissue according to any of the preceding claims,

the method further comprising:

- the classification module implements an upper level classification model on the image of the biological tissue according to the upper-label relative to the biological characteristic of the biological tissue,

the classification output of the upper level classification model implemented being relative to the biological characteristic of the biological tissue .

5. Method to classify an image of biological tissue from a biological tissue of a patient according to a label relative to a biological characteristic of the biological tissue according to any of the preceding claims,

the method further comprising:

- the classification module implements an inter-hierarchical classification model on the image of the biological tissue according to a label exterior to or not comprised in the hierarchical label architecture;

the label exterior to or not comprised in the hierarchical label architecture being relative to a biological characteristic of the biological tissue;
the classification output of the inter-hierarchical classification model implemented being relative this biological characteristic of the biological tissue.

6. Method to classify an image of biological tissue from a biological tissue of a patient according to a label relative to a biological characteristic of the biological tissue according to any of the preceding claims,

the method further comprising:

- an aggregation module aggregates the classification outputs of the various infra-level classification models implemented by the classification module into an aggregated classification output by implementing a aggregation method on the classification outputs;

the aggregation method preferably being one of the following:

- weighted sum method,
- multi layer perceptron method,
- unweighted model averaging method,
- majority voting method,
- Bayes optimal classifier method,
- stacked Generalization method,
- super learner method,
- consensus method,
- query-by-committee method.

7. Method to classify an image of biological tissue from a biological tissue of a patient according to a label relative to a biological characteristic of the biological tissue according to any of the preceding claims,
wherein the image is one of the followings:

- an image of a histopathology slide of a biological tissue of the patient.
- an image of a cytology slide of a biological tissue of the patient.

8. Method to identify the mutational status of a gene from an image of a biological tissue of a patient by implementing the method according to any of the preceding claims;

a gene being a sequence of nucleotides ,
the mutational status of a gene being defined by a presence of a variant in this sequence; wherein:

- the biological characteristic of the biological tissue is the mutational status of the gene;
- the infra-level labels of the infra-level label classification models implemented by the classification module are relative to one of the alternative variants of the gene whom mutational status is to be identified,

the classification outputs of the infra-level label classification models implemented are relative to one of the alternative variants of the gene whom mutational status is to be identified.

9. Method to identify the mutational status of a gene from an image of a biological tissue of a patient by implementing the method according to claim 2 to 7,
wherein:

- the infra-level label of the infra-level label classification model implemented by the classification module is relative to a group of at least two alternative variants of the gene whom mutational status is to be identified.

10. Method to identify the mutational status of a gene from an image of a biological tissue from a biological tissue of a patient by implementing the method according to claim 3 to 7,
wherein:

- the infra-level label of the infra-level label classification model implemented by the classification module is relative to :

- one of the alternative variants of the gene whom mutational status is to be identified,
- the gene ontology,
- a gene pathways related to the gene, or
- drug or disease related to the gene

- the classification output of the infra-level label classification model implemented by the classification module is relative to :

- one of the alternative variants of the gene whom mutational status is to be identified,
- the gene ontology,
- a gene pathways related to the gene, or
- drug or disease related to the gene.

11. Method to identify the mutational status of a gene from an image of a biological tissue from a biological tissue of a patient by implementing the method according to claim 4 to 7, wherein:

- the upper label is relative to the mutational status of the gene.

12. Method to identify the mutational status of a gene from an image of a biological tissue from a biological tissue of a patient by implementing the method according to claim 5 to 7,
wherein the label, relative to a biological characteristic of the biological tissue, exterior to or not comprised in the label hierarchical architecture is relative to one of the following biological characteristics:

- a variant for another gene,
- a variant of a biological entity different from a gene

13. Method to identify the mutational status of a gene from an image of a biological tissue from a biological tissue of a patient according to any of the claims 8 to 12 in order to determine if the biological tissue is cancerous or not.

14. System to classify an image of a biological tissue of a patient according to a label relative to a biological characteristic of the biological tissue,

this label, relative to the biological characteristic of the biological tissue, being an upper-label according to a label hierarchical architecture,
the hierarchical label architecture comprising :

- a first lower hierarchical label level comprising :
a plurality of first infra-level labels, each being relative to a first lower level biological characteristic of the biological tissue,
- a upper hierarchical label level comprising :
an upper-level label, relative to the biological characteristic of the biological tissue , defined by a combination of the plurality of infra-level labels,

the biological characteristics of the biological tissue being determined by the first lower level biological characteristics of the biological tissue;

the system comprising:

- a classification module adapted to implement a plurality of infra-level label classification models on the image of biological tissue,

each infra-label classification model being relative to a first infra-level label of the first lower hierarchical label level relative to a first lower level biological characteristic of the biological tissue;
the classification output of each of the infra-level label classification models implemented being relative to a first lower level biological characteristic of the biological tissue.

15. Computer program for classify an image of biological tissue from a biological tissue of a patient according to a label relative to a biological characteristic of the biological tissue wherein the computer program is adapted, when run on a processor, to cause the processor to implement the method of the claim 1 to 8 and/or the method of the claims 9 to 12.

1.

Case 1

Case 2

2.

| gene | strategy | dataset | loop | run | score |
|------|----------|---------|------|-----|-------|
| EGFR | ninja_strat | gbm | 4.0 | 646486.0 | 0.647388 |
|  | standard_strat | gbm | 4.0 | 646486.0 | 0.558511 |
| IDH1 | ninja_strat | gbm | 4.0 | 646486.0 | 0.649211 |
|  | standard_strat | gbm | 4.0 | 646486.0 | 0.519100 |
| PIK3CA | ninja_strat | coad | 4.0 | 646486.0 | 0.633234 |
|  | standard_strat | coad | 4.0 | 646486.0 | 0.635917 |
| PTEN | ninja_strat | ucec | 4.0 | 646486.0 | 0.575255 |
|  | standard_strat | ucec | 4.0 | 646486.0 | 0.535204 |
| TP53 | ninja_strat | coad | 4.0 | 646486.0 | 0.640949 |
|  | standard_strat | coad | 4.0 | 646486.0 | 0.608174 |

**EP 4 361 969 A1**

Europäisches Patentamt
European Patent Office
Office européen des brevets

# EUROPEAN SEARCH REPORT

Application Number

EP 22 20 3310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/272864 A1 (FAUST KEVIN [CA] ET AL) 27 August 2020 (2020-08-27) * paragraphs [0004], [0081], [0090], [0093], [0098], [0103] – [0105], [0116], [0120], [0133], [0134], [0150], [0153] * * paragraphs [0204], [0212], [0213], [0214], [0221], [0226], [0261], [0270], [0275], [0278], [0299] * ----- | 1-15 | INV. G06V20/69 G06F18/25 |
| X | US 2020/365268 A1 (MICHUDA JACKSON [US] ET AL) 19 November 2020 (2020-11-19) * paragraphs [0038], [0129], [0130], [0161], [0168] – [0172], [0201], [0240], [0245] – [0247], [0283], [0328] * ----- | 1-15 | |
| X | US 2010/111396 A1 (BOUCHERON LAURA E [US]) 6 May 2010 (2010-05-06) * abstract * * paragraphs [0037], [0199] – [0216], [0364] – [0366], [0543], [0742], [0778], [0800], [0804] * ----- | 1-15 | TECHNICAL FIELDS SEARCHED (IPC) G06V G06F |
| X | DAVID AHMEDT-ARISTIZABAL ET AL: "A Survey on Graph-Based Deep Learning for Computational Histopathology", ARXIV.ORG, CORNELL UNIVERSITY LIBRARY, 201 OLIN LIBRARY CORNELL UNIVERSITY ITHACA, NY 14853, 27 September 2021 (2021-09-27), XP091046425, * Section I.A; Section II.C.b); Section III; * ----- | 1-15 | |

The present search report has been drawn up for all claims

| Place of search | Date of completion of the search | Examiner |
|---|---|---|
| The Hague | 28 March 2023 | Androulidakis, Iosif |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

26

## ANNEX TO THE EUROPEAN SEARCH REPORT
## ON EUROPEAN PATENT APPLICATION NO.

EP 22 20 3310

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2023

| Patent document cited in search report | | Publication date | Patent family member(s) | | Publication date |
|---|---|---|---|---|---|
| US 2020272864 | A1 | 27-08-2020 | CA | 3081643 A1 | 09-05-2019 |
| | | | US | 2020272864 A1 | 27-08-2020 |
| | | | WO | 2019084697 A1 | 09-05-2019 |
| US 2020365268 | A1 | 19-11-2020 | AU | 2020274091 A1 | 09-12-2021 |
| | | | CA | 3140365 A1 | 19-11-2020 |
| | | | EP | 3970152 A1 | 23-03-2022 |
| | | | JP | 2022532897 A | 20-07-2022 |
| | | | US | 2020365268 A1 | 19-11-2020 |
| | | | WO | 2020232033 A1 | 19-11-2020 |
| US 2010111396 | A1 | 06-05-2010 | NONE | | |

EPO FORM P0459

For more details about this annex : see Official Journal of the European Patent Office, No. 12/82